# EUROPÄISCHE PATENTSCHRIFT

(11) **EP 2 539 610 B1**
(45) Veröffentlichungstag und Bekanntmachung des Hinweises auf die Patenterteilung: **25.06.2014**
(21) Anmeldenummer: 10784993.7
(22) Anmeldetag: 30.11.2010
(51) Int. Cl.: F16H 61/30, F16H 63/38

(54) **GETRIEBESTELLER**
TRANSMISSION ACTUATOR
ACTIONNEUR DE BOÎTE DE VITESSES

(30) Priorität: 25.02.2010 DE 102010009338
(43) Veröffentlichungstag der Anmeldung: 02.01.2013
(73) Patentinhaber: WABCO GmbH, 30453 Hannover (DE)
(72) Erfinder: KELPE, Holger, 30926 SEELZE (DE); KLIK, Stefan, 30459 Hannover (DE); WILLMS, Jens, 30926 Seelze (DE)
(74) Vertreter: Lauerwald, Jörg
(86) Internationale Anmeldenummer: PCT/EP2010/007232
(87) Internationale Veröffentlichungsnummer: WO 2011/103895

(56) Entgegenhaltungen:
- EP-A2- 1 120 589
- DE-A1- 2 510 392
- DE-A1- 19 957 750
- DE-A1-102005 022 995
- US-A- 3 418 807

## Beschreibung

Die Erfindung betrifft einen Getriebesteller zur automatisierten Betätigung eines Schaltgetriebes gemäß dem Oberbegriff des Patentanspruchs 1.

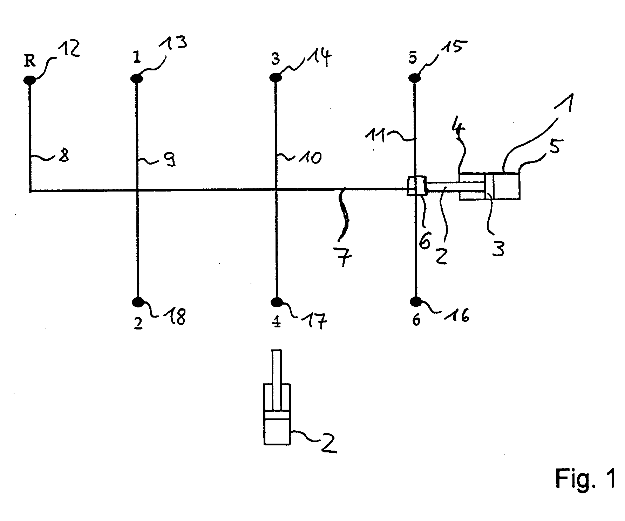

Derartige Getriebesteller, wie sie aus der gattungsgemäßen US 3 418 807 A, der DE 25 10 392 A1, oder der EP 1 120 589 A2 bekannt sind, werden zur Getriebeautomatisierung von Schaltgetrieben eingesetzt. Bei solchen Schaltgetrieben ist vorgesehen, dass ein Gangwahlelement, das bei manueller Betätigung mit einem Schaltknüppel betätigt werden würde, entlang einer Wählgasse bis zu einer gewünschten Schaltgasse geführt und dann in eine Gangposition bewegt wird, um einen Gang einzulegen. Entlang der Wählgasse sind quer zur Wählgasse in der Regel mehrere Schaltgassen vorgesehen. Die Schaltgassen enden dabei in Positionen, in denen ein Gang eingelegt ist. Die Figur 1 zeigt beispielhaft ein Getriebe mit sechs Vorwärtsgängen und einem Rückwärtsgang in stark schematisierter Darstellung. Entlang einer Wählgasse 7 sind drei Schaltgassen 9, 10, 11 für die Vorwärtsgänge und eine weitere Schaltgasse 8 für den Rückwärtsgang angeordnet.

Ein Getriebesteller für die Getriebeautomatisierung weist üblicherweise einen Stellzylinder auf, über den das Gangwahlelement entlang der Wählgasse geführt und an einem Kreuzungspunkt einer gewünschten Schaltgasse positioniert werden kann. Ein solcher Stellzylinder wird auch als Gassenwahl-Stellzylinder bezeichnet. Zum Einlegen eines Gangs in der gewählten Schaltgasse ist ein Gangwahl-Stellzylinder vorgesehen, der das Gangwahlelement entsprechend in der ausgewählten Schaltgasse führt und positioniert, so dass der gewünschte Gang eingelegt wird.

Für die genaue Positionierung des Gangwahlelements in der Wählgasse ist bei bisherigen Getriebestellern vorgesehen, einen Gassenwahl-Stellzylinder einzusetzen, der eine der Anzahl der Schaltgassen entsprechende Anzahl definierter, durch Druckmittelbetätigung einstellbarer Schaltstellungen aufweist. Für das Anfahren von drei Positionen wird beispielsweise ein Dreistellungszylinder eingesetzt. Ein solcher Dreistellungszylinder ist an sich bereits relativ aufwendig. Für die genaue Positionierung bei einer höheren Anzahl von Schaltpositionen wäre der konstruktive Aufwand für einen entsprechenden Mehrstellungszylinder noch höher.

Der Erfindung liegt daher die Aufgabe zu Grunde, einen Getriebesteller zur automatisierten Betätigung eines Schaltgetriebes anzugeben, bei dem mit geringem konstruktivem Aufwand eine Mehrzahl von definierten Positionen anfahrbar ist.

Diese Aufgabe wird durch die in dem Patentanspruch 1 angegebene Erfindung gelöst. Die Unteransprüche geben vorteilhafte Weiterbildungen der Erfindung an.

Gemäß der Erfindung ist vorgesehen, dass der Gassenwahl-Stellzylinder oder ein von dem Gassenwahl-Stellzylinder bewegbares Bauteil über eine Rastvorrichtung in wenigstens einer vorbestimmten Rastposition selbsttätig fixierbar ist. Das Vorsehen einer solchen Rastvorrichtung ist mit relativ geringem konstruktivem Aufwand mit zugleich günstigen Herstellungskosten möglich. Eine Rastvorrichtung kann auch mit vernünftigem Aufwand in bereits vorhandenen Getriebesteiler-Konstruktionen implementiert werden. Mittels der Erfindung ist es vorteilhaft möglich, einen relativ einfachen Stellzylinder als Gassenwahl-Stellzylinder zu verwenden, wie z. B. einen doppelt wirkenden Stellzylinder mit an sich nur zwei definierten Positionen, nämlich einer vorderen und einer hinteren Endstellung. Bei einer Betätigung eines solchen Stellzylinders mit Druck-mittel, insbesondere mit Druckluft, wäre ein Anfahren von definierten Zwischenpositionen zwischen den Endstellungen nicht ohne Weiteres möglich. Durch Einsatz der gemäß der Erfindung vorgeschlagenen Rastvorrichtung ist mit geringem Aufwand eine Fixierung in einer oder mehreren zusätzlichen gewünschten Zwischenpositionen, entsprechend den Rastpositionen, zwischen den Endstellungen möglich.

Gegenüber anderen konstruktiven Lösungen, wie z. B. dem Vorsehen eines zusätzlichen Kolbens in einem Mehrstellungszylinder, kann die gemäß der Erfindung vorgeschlagene Lösung preisgünstig realisiert werden und kann auf Grund eines nur geringen Bauraumbedarfs leicht in vorhandene Geräte integriert werden. Gegenüber einer Federzentrierung hat die Erfindung den Vorteil, dass die erforderliche Schaltkraft des Stellzylinders nicht bzw. nur unwesentlich erhöht wird.

Erfindungsgemäß weist der Getriebesteller einen Wegsensor zur Erfassung des Betätigungshubs des Gassenwahl-Stellzylinders auf. Mittels des Wegsensors ist vorteilhaft eine Überwachung der Betätigung des Gassenwahl-Stellzylinders und des Erreichens der gewünschten Schaltpositionen möglich.

Hierbei ist der Wegsensor mit einer elektronischen Steuereinrichtung verbunden. Die elektronische Steuereinrichtung ist zur Auswertung des Wegsignals des Wegsensors und zur Ausgabe eines Betätigungssignals an den Gassenwahl-Stellzylinder eingerichtet. Die elektronische Steuereinrichtung ist ferner zum automatischen Lernen der Rastposition sowie der für eine Betätigung des Gassenwahl-Stellzylinders aus einer Endstellung, oder auch aus der Zwischenstellung, in die Rastposition erforderlichen Betätigungszeit eingerichtet. Dies erlaubt eine vorteilhafte Selbstlernfunktion der elektronischen Steuerung des Getriebestellers. Die Lernfunktion kann beispielsweise in Form einer Funktion in der Software der elektronischen Steuereinrichtung vorgesehen sein. Über die Lernfunktion kann z. B. bei veränderten Reibbedingungen im Betrieb des Getriebestellers eine automatische Anpassung der erforderlichen Betätigungszeit des Gassenwahl-Stellzylinders zum Anfahren einer bestimmten Position erlernt und dann angewandt werden. Dies erlaubt insgesamt einen wartungsarmen Betrieb des Getriebestellers.

Die Erfindung erfasst auch die Möglichkeit, eine oder beide Endstellungen des Stellzylinders als Rastposition auszubilden. Gemäß einer vorteilhaften Weiterbildung der Erfindung ist die Rastposition von den Endstellungen des Gassenwahl-Stellzylinders verschieden. Hierdurch kann vorteilhaft auf einfache Weise eine zusätzliche, definiert anfahrbare Schaltposition für die Gassenwahl geschaffen werden.

Gemäß einer vorteilhaften Weiterbildung der Erfindung ist die durch die Rastvorrichtung bewirkte Fixierung durch Betätigung des Gassenwahl-Stellzylinders überwindbar. Dies hat den Vorteil, dass keine zusätzlichen Bauteile für eine Entriegelung der Rastvorrichtung erforderlich sind, wie etwa ein druckluftbetätigter Kolben. Die Fixierung kann bereits durch Druckmittelbetätigung des Gassenwahl-Stellzylinders überwunden werden, indem dieser mit einem ausreichend hohen Druck betätigt wird.

Gemäß einer vorteilhaften Weiterbildung der Erfindung ist der Gassenwahl-Stellzylinder zum Verschieben eines Schaltfingers in einer Wählgasse eingerichtet. Der Schaltfinger dient hierbei vorteilhaft als Gangwahlelement, mit dem die entsprechenden Getriebeteile zum Einlegen eines Gangs betätigbar sind.

Gemäß einer vorteilhaften Weiterbildung der Erfindung ist der Gassenwahl-Stellzylinder als Mehrstellungszylinder ausgebildet, der außer den Endstellungen wenigstens eine vorbestimmte, durch Druckmittelbetätigung anfahrbare Zwischenstellung aufweist. Der Gassenwahl-Stellzylinder kann insbesondere als Dreistellungszylinder ausgebildet sein. Die Rastposition ist dabei von den Endstellungen und der Zwischenstellung verschieden. Hierdurch ergibt sich mit geringem Aufwand eine weitere definiert anfahrbare Schaltstellung, ohne dass der Gassenwahl-Stellzylinder konstruktiv aufwendiger gestaltet werden muss. So kann mit einem Dreistellungszylinder und einer zusätzlichen Rastposition ein Getriebe mit vier Schaltgassen vom Getriebesteller automatisiert betätigt werden.

Die Erfindung erfasst die Möglichkeit, dass auch weitere Rastpositionen vorgesehen sind. Hierdurch lässt sich die Anzahl der definiert anfahrbaren Schaltstellungen mit geringem Aufwand weiter erhöhen.

Gemäß einer vorteilhaften Weiterbildung der Erfindung weist die Rastvorrichtung ein Verriegelungselement auf, das in der Rastposition in eine zugeordnete Verriegelungsvertiefung eingreift. Das Verriegelungselement ist in Richtung der Verriegelungsvertiefung federkraftbeaufschlagt. Dies erlaubt eine konstruktiv einfache und kostengünstige Realisierung einer selbsttätig wirkenden Rastvorrichtung.

Gemäß einer vorteilhaften Weiterbildung der Erfindung weist die Verriegelungsvertiefung schräge Seitenwände auf. Dies erlaubt vorteilhaft, bei entsprechender Dimensionierung der Federkraft der Rastvorrichtung, des Winkels der Seitenwände sowie des in die Verriegelungsvertiefung eingreifenden Profils des Verriegelungselements die Rastvorrichtung derart abzustimmen, dass einerseits eine sichere Fixierung in der Rastposition ermöglicht wird, andererseits durch Druckmittelbetätigung die durch die Rastvorrichtung bewirkte Fixierung durch Druckmittel-Betätigung des Gassenwahl-Stellzylinders überwindbar ist.

Gemäß einer vorteilhaften Weiterbildung der Erfindung ist das Verriegelungselement in den Schaltfinger integriert angeordnet. Dies erlaubt eine konstruktiv günstige und Platz sparende Anordnung des Verriegelungselements.

Die Erfindung wird nachfolgend anhand von Ausführungsbeispielen unter Verwendung von Zeichnungen näher erläutert.

Es zeigen
Figur 1 - einen Getriebesteller mit einem Schaltgetriebe in schematisierter Darstellung und
Figur 2 - einen Gassenwahl-Stellzylinder mit Betätigungselementen und
Figur 3 - eine ausschnittsweise Darstellung eines Getriebestellers.

In den Figuren werden gleiche Bezugszeichen für einander entsprechende Elemente verwendet.

Die Figur 1 zeigt ein stark schematisiert wiedergegebenes Schaltgetriebe mit vier Schaltgassen 8, 9, 10, 11 und einer Wählgasse 7. Ein Gangwahlelement 6 ist entlang der Wählgasse 7 bewegbar und bei Erreichen einer Schaltgasse 8, 9, 10, 11 in orthogonaler Richtung in eine der Positionen 12, 13, 14, 15, 16, 17, 18 bewegbar. In diesen Positionen 12, 13, 14, 15, 16, 17, 18 ist ein gewünschter Gang des dargestellten Schaltgetriebes einlegbar. Zur Betätigung des Gangwahlelements 6 entlang der Wählgasse ist ein Gassenwahl-Stellzylinder 1 vorgesehen. Zur Betätigung des Gangwahlelements 6 entlang einer Schaltgasse ist ein Gangwahl-Stellzylinder 2 vorgesehen.

Der Gassenwahl-Stellzylinder 1 ist z. B. als doppelt wirkender Stellzylinder mit einem Kolben 3 und einer Kolbenstange 2 ausgebildet. Die Kolbenstange 2 ist mit dem Gangwahlelement 6 verbunden. Durch entsprechende DruckmittelBeaufschlagung der jeweiligen links oder rechts von dem Kolben 3 befindlichen Druckmittelkammer kann der Kolben 3 in dem Stellzylinder 1 entweder in die linke Endstellung 4 oder in die rechte Endstellung 5 bewegt werden. Als Druckmittel kommt insbesondere Druckluft in Frage.

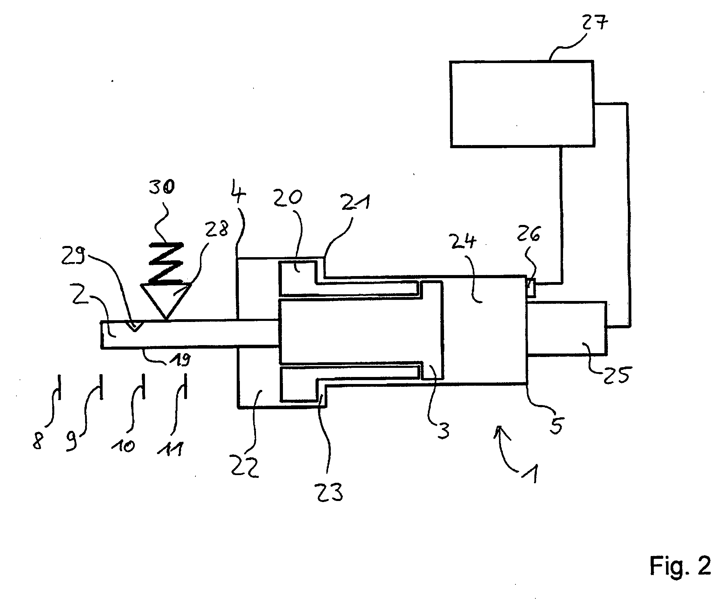

Die Figur 2 zeigt eine Ausführungsform des Gassenwahl-Stellzylinders 1 als Dreistellungszylinder. Der Gassenwahl-Stellzylinder 1 weist hierfür neben dem bereits anhand der Figur 1 angesprochenen Kolben 3, der mit der Kolbenstange 2 verbunden ist, einen weiteren Kolben 20 auf. Der Kolben 3 ist gegenüber dem weiteren Kolben 20 verschiebbar. Der Gassenwahl-Stellzylinder 1 weist zudem an der Position 21 eine Schulter auf, die als Anschlag für den weiteren Kolben 20 dient. Zwischen dem Kolben 3, dem weiteren Kolben 20 und dem Gehäuse des Gassenwahl-Stellzylinders 1 sind Druckmittelkammern 22, 23, 24 gebildet. Durch entsprechende Steuerung der Druckmittelbeaufschlagung der Druckmittelkammern 22, 24 kann die Kolbenstange 2 in drei Positionen verfahren werden, nämlich in die den Schaltgassen 8, 9, 11 entsprechenden Positionen. Zum Anfahren der Schaltgasse 8 ist die Druckmittelkammer 24 mit Druck zu beaufschlagen. Für ein Anfahren der Schaltgasse 9 sind die Druckmittelkammern 22 und 24 mit Druck zu beaufschlagen. Für ein Anfahren der Schaltgasse 11 ist nur die Druckmittelkammer 22 mit Druck zu beaufschlagen. Die den Schaltgassen 8, 9, 10, 11 entsprechenden Positionen sind in der Figur 2 in Bezug auf das Ende der Kolbenstange 2 dargestellt. Die Druckmittelkammer 23 (Mittenraum) ist mit Atmosphärendruck verbunden und wird nicht Druck beaufschlagt.

Damit auch die Schaltgasse 10 angefahren werden kann, ist eine Rastvorrichtung vorgesehen, die ein Verriegelungselement 28 aufweist, das über eine Feder 30 an einem Gehäusebauteil oder sonstigem fest angeordneten Bauteil des Getriebestellern abgestützt ist. An der Kolbenstange 2 ist eine Rastvertiefung vorgesehen, die in Form einer Senkung 29 ausgebildet sein kann. Wird der Gassenwahl-Stellzylinder 1 beispielsweise von der Schaltgasse 9 in Richtung zur Schaltgasse 11 hin verstellt, so trifft das Verriegelungselement 28 zu einem bestimmten Zeitpunkt auf die Verriegelungsvertiefung 29 und rastet darin ein. Sofern der Druck in der Druckmittelkammer 22 ausreichend hoch bleibt, wird die Kolbenstange weiter in Richtung zur Schaltgasse 11 hin bewegt und die Fixierung an der Rastposition wird sogleich wieder überwunden. Sofern die Druckmittelkammer 22 mit einem entsprechend kurzen Druckpuls beaufschlagt wird, der bei Erreichen der Rastposition 19 auf ausreichend geringes Maß reduziert ist, erfolgt eine selbsttätige Fixierung in der Rastposition 19. Das Maß, auf das der Druckpuls bei Erreichen der Rastposition 19 reduziert sein muss, um die Fixierung zu gewährleisten, wird bestimmt durch die Federkraft der Feder 30 und die jeweilige Konturierung der ineinander greifenden Oberflächen des Verriegelungselements 28 und der Verriegelungsvertiefung 29.

Ein Verstellen des Gassenwahl-Stellzylinders 1 aus der Rastposition 19 in eine andere Schaltposition erfolgt durch Druckmittelbeaufschlagung der entsprechenden Druckmittelkammern 22, 24. Hierdurch wird die Fixierung an der Rastposition überwunden.

Der Gassenwahl-Stellzylinder 1 weist eine elektrisch ansteuerbare Betätigungseinheit 25 auf, die z. B. durch Magnetventile realisiert sein kann. Über die Betätigungseinheit 25 wird Druckmittel entsprechend der Vorgabe einer elektronischen Steuereinrichtung 27 in die Druckmittelkammern 22, 24 gelassen oder daraus abgebaut.

Der Stellzylinder 1 weist außerdem einen Wegsensor 26 auf, über den der von dem Kolben 3 bzw. der Kolbenstange 2 jeweils zurückgelegte Hub erfassbar ist. Der Wegsensor 26 kann z. B. als induktiver Sensor, insbesondere als PLCD-Sensor, ausgebildet sein.

Der Wegsensor 26 sowie die Betätigungseinheit 25 sind über elektrische Leitungen mit der elektronischen Steuereinrichtung 27 verbunden. Die elektronische Steuereinrichtung 27 dient zur Steuerung des Getriebestellers und weist ein entsprechendes Steuerungsprogramm auf.

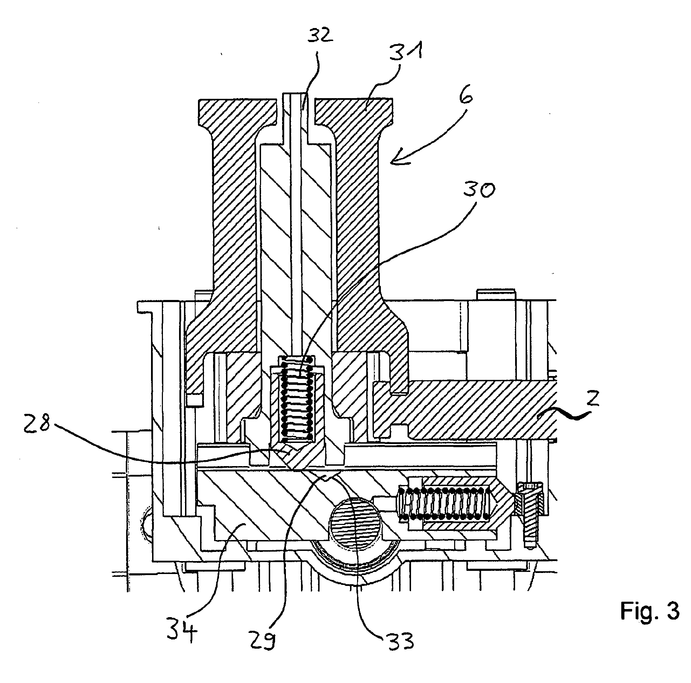

Die Figur 3 zeigt die für die Erfindung relevanten konstruktiven Elemente des Getriebestellers, der in Figur 3 ausschnittsweise wiedergegeben ist. Erkennbar ist die Kolbenstange 2, die mit dem Gangwahlelement 6 verbunden ist. Das Gangwahlelement 6 weist ein Blockierstück 31, einen Schaltfinger 32, ein Gassenverschiebestück und ein Gangverschiebestück 34 auf. Das Blockierstück 31 stellt die Verbindung der Kolbenstange 2 mit dem Gangwahlelement 6 her. Der Schaltfinger 32 ist innerhalb des Blockierstücks 31 angeordnet. Das Gassenverschiebestück ist mit dem Blockierstück 31 fest verschraubt. Das Gassenverschiebestück dient zur Gassenwahl und ist daher in Wählgassenrichtung verschiebbar. Das Gassenverschiebestück wirkt gleichzeitig als Führungselement für den Schaltfinger 32 in Schaltgassen-Richtung. Das Gangverschiebestück 34 ist in Schaltgassen-Richtung verschiebbar. Es dient gleichzeitig als Führung in Wählgassen-Richtung.

Innerhalb des Schaltfingers 32 ist das Verriegelungselement 28 in Form eines Rastbolzens mit der Feder 30 angeordnet. In dem Gangverschiebestück 34 unterhalb des Schaltfingers 32 ist die Verriegelungsvertiefung 29 in Form einer Senkung angeordnet. Die Senkung 29 weist eine umlaufende Wand 33 auf, die eine vorbestimmte Schräge hat. Die Schräge der Wand 33 ist auf die Spitze des Rastbolzens 28 derart abgestimmt, das unter weiterer Berücksichtigung der Kraft der Feder 30 ein Überwinden der Rastposition 19 durch Druckbeaufschlagung des Stellzylinders 1 erfolgen kann.

Wie anhand der in den Figuren 2 und 3 dargestellten Ausführungsbeispiele erkennbar ist, erlaubt die Erfindung verschiedene Möglichkeiten der vorteilhaften Anordnung der Bauteile der Rastvorrichtung in dem Getriebesteller. Die Figur 2 zeigt ein Beispiel, bei dem das Verriegelungselement 28 sowie die Feder 30 an einer gehäusefesten Position angeordnet sind, während die Verriegelungsvertiefung 29 an einem demgegenüber beweglichen Bauteil angeordnet ist. Die Figur 3 zeigt ein Beispiel, bei dem die Verriegelungsvertiefung 29 an einer gehäusefesten Position angeordnet ist, während das Verriegelungselement 28 sowie die Feder 30 an einem demgegenüber beweglichen Bauteil angeordnet sind.

## Patentansprüche

1. Getriebesteller zur automatisierten Betätigung eines Schaltgetriebes, mit einem Gassenwahl-Stellzylinder (1) zur Auswahl einer Schaltgasse (8, 9, 10, 11) und einem Gangwahl-Stellzylinder (2) zum Einlegen eines Gangs (12, 13, 14, 15, 16, 17, 18) in einer Schaltgasse (8, 9, 10, 11), wobei der Gassenwahl-Stellzylinder (1) oder ein von dem Gassenwahl-Stellzylinder (1) bewegbares Bauteil (6) über eine Rastvorrichtung (28, 29, 30) in wenigstens einer vorbestimmten Rastposition (19) selbsttätig fixierbar ist, **dadurch gekennzeichnet, dass** der Getriebesteller einen Wegsensor (26) zur Erfassung eines Betätigungshubs des Gassenwahl-Stellzylinders (1) aufweist, wobei der Wegsensor (26) mit einer elektronischen Steuereinrichtung (27) verbunden ist, die zur Auswertung eines Wegsignals des Wegsensors (26) und zur Ausgabe eines Betätigungssignals an den Gassenwahl-Stellzylinder (1) eingerichtet ist, wobei die elektronische Steuereinrichtung (27) zum automatischen Lernen der Rastposition (19) sowie einer für eine Betätigung des Gassenwahl-Stellzylinders (1) aus einer Endstellung (4, 5) in die Rastposition (19) erforderlichen Betätigungszeit eingerichtet ist.

2. Getriebesteller nach Anspruch 1, **dadurch gekennzeichnet, dass** die durch die Rastvorrichtung bewirkte Fixierung (28, 29, 30) durch Druckmittelbetätigung des Gassenwahl-Stellzylinders (1) überwindbar ist.

3. Getriebesteller nach einem der vorhergehenden Ansprüche, **dadurch gekennzeichnet, dass** die Rastposition (19) von den Endstellungen (4, 5) des Gassenwahl-Stellzylinders (1) verschieden ist.

4. Getriebesteller nach einem der vorhergehenden Ansprüche, **dadurch gekennzeichnet, dass** der Gassenwahl-Stellzylinder (1) zum Verschieben eines Schaltfingers (6) in einer Wählgasse (7) eingerichtet ist.

5. Getriebesteller nach einem der vorhergehenden Ansprüche, **dadurch gekennzeichnet, dass** der Gassenwahl-Stellzylinder (1) als Mehrstellungszylinder ausgebildet ist, der außer den Endstellungen (4, 5) wenigstens eine vorbestimmte, durch Druckmittelbetätigung anfahrbare Zwischenstellung (21) aufweist, und die Rastposition (19) von den Endstellungen (4, 5) und der Zwischenstellung (21) verschieden ist.

6. Getriebesteller nach einem der vorhergehenden Ansprüche, **dadurch gekennzeichnet, dass** die Rastvorrichtung (28, 29, 30) ein Verriegelungselement (28) aufweist, das in der Rastposition (19) in eine zugeordnete Verriegelungsvertiefung (29) eingreift, und das Verriegelungselement (28) in Richtung der Verriegelungsvertiefung (29) federkraftbeaufschlagt ist.

7. Getriebesteller nach Anspruch 6, **dadurch gekennzeichnet, dass** die Verriegelungsvertiefung (29) schräge Seitenwände (33) aufweist.

8. Getriebesteller nach Anspruch 4 und wenigstens einem der Ansprüche 6 oder 7, **dadurch gekennzeichnet, dass** das Verriegelungselement (28) in den Schaltfinger (6) integriert angeordnet ist.

## Claims

1. Gearbox actuator for automatic operation of a manual gearbox with a gate selection actuating cylinder (1) for selection of a shift gate (8, 9, 10, 11) and a gear selection actuating cylinder (2) for engaging a gear (12, 13, 14, 15, 16, 17, 18) in a shift gate (8, 9, 10, 11), wherein the gate selection actuating cylinder (1) or a component (6) which can be moved by the gate selection actuating cylinder (1) can be fixed automatically via a catch device (28, 29, 30) in at least one predetermined catch position (19), **characterised in that** the gearbox actuator comprises a distance sensor (26) to detect an activation stroke of the gate selection actuating cylinder (1), wherein the distance sensor (26) is connected with an electronic control device (27) which is designed to evaluate a distance signal of the distance sensor (26) and to output an activation signal to the gate selection actuating cylinder (1), wherein the electronic control device (27) is designed for automatic learning of the catch position (19) and an activation time necessary for activating the gate selection actuating cylinder (1) from an end position (4, 5) into the catch position (19).

2. Gearbox actuator according to claim 1, **characterised in that** the fixing (28, 29, 30) achieved by the catch device can be overcome by activation of pressure medium of the gate selection actuating cylinder (1).

3. Gearbox actuator according to either of the preceding claims, **characterised in that** the catch position (19) differs from the end positions (4, 5) of the gate selection actuating cylinder (1).

4. Gearbox actuator according to any of the preceding claims, **characterised in that** the gate selection actuating cylinder (1) is designed for moving a shift finger (6) in a selection gate (7).

5. Gearbox actuator according to any of the preceding claims, **characterised in that** the gate selection actuating cylinder (1) is formed as a multiposition cylinder which in addition to the end positions (4, 5) has at least one predetermined intermediate position (21) which can be approached by activation of pressure medium, and the catch position (19) is different from the end positions (4, 5) and the intermediate position (21).

6. Gearbox actuator according to any of the preceding claims, **characterised in that** the catch device (28, 29, 30) has a locking element (28) which in the catch position (19) engages in an allocated locking recess (29), and the locking element (28) is exposed to spring force in the direction of the locking recess (29).

7. Gearbox actuator according to claim 6, **characterised in that** the locking recess (29) has sloping side walls (33).

8. Gearbox actuator according to claim 4 and at least one of claims 6 or 7, **characterised in that** the locking element (28) is arranged integrated in the shift finger (6).

## Revendications

1. Actionneur d'engrenage pour l'actionnement automatisé d'une boîte de vitesses, comprenant un vérin de commande de sélection de voie (1) pour sélectionner une voie de changement de rapport (8, 9, 10, 11) et un vérin de commande de sélection de rapport (2) pour engager un rapport (12, 13, 14, 15, 16, 17, 18) dans une voie de changement de rapport (8, 9, 10, 11), le vérin de commande de sélection de voie (1) ou un composant (6) qui peut être déplacé par le vérin de commande de sélection de voie (1) pouvant être bloqué automatiquement dans au moins une position enclenchée (19) prédéfinie par le biais d'un dispositif d'enclenchement (28, 29, 30), **caractérisé en ce que** l'actionneur d'engrenage présente un capteur de course (26) pour détecter une course d'actionnement du vérin de commande de sélection de voie (1), le capteur de course (26) étant relié avec un dispositif de contrôle électronique (27) qui est configuré pour interpréter un signal de course du capteur de course (26) et pour délivrer un signal d'actionnement au vérin de commande de sélection de voie (1), le dispositif de contrôle électronique (27) étant configuré pour apprendre automatiquement la position enclenchée (19) ainsi qu'un temps d'actionnement nécessaire pour un actionnement du vérin de commande de sélection de voie (1) d'une position finale (4, 5) dans la position enclenchée (19).

2. Actionneur d'engrenage selon la revendication 1, **caractérisé en ce que** le blocage provoqué par le dispositif d'enclenchement (28, 29, 30) peut être surmonté par un actionnement par un fluide sous pression du vérin de commande de sélection de voie (1).

3. Actionneur d'engrenage selon l'une des revendications précédentes, **caractérisé en ce que** la position enclenchée (19) est différente des positions finales (4, 5) du vérin de commande de sélection de voie (1).

4. Actionneur d'engrenage selon l'une des revendications précédentes, **caractérisé en ce que** le vérin de commande de sélection de voie (1) est configuré pour décaler un doigt de commande (6) dans une voie de sélection (7).

5. Actionneur d'engrenage selon l'une des revendications précédentes, **caractérisé en ce que** le vérin de commande de sélection de voie (1) est réalisé sous la forme d'un vérin à positions multiples qui, en plus des positions finales (4, 5), présente au moins une position intermédiaire (21) prédéfinie qui peut être atteinte par actionnement par un fluide sous pression et la position enclenchée (19) est différente des positions finales (4, 5) et de la position intermédiaire (21).

6. Actionneur d'engrenage selon l'une des revendications précédentes, **caractérisé en ce que** le dispositif d'enclenchement (28, 29, 30) présente un élément de verrouillage (28) qui, dans la position enclenchée (19), vient en prise dans un enfoncement de verrouillage (29) associé, et l'élément de verrouillage (28) est chargé par la force d'un ressort en direction de l'enfoncement de verrouillage (29).

7. Actionneur d'engrenage selon la revendication 6, **caractérisé en ce que** l'enfoncement de verrouillage (29) présente des parois latérales (33) inclinées.

8. Actionneur d'engrenage selon la revendication 4 et au moins l'une des revendications 6 ou 7, **caractérisé en ce que** l'élément de verrouillage (28) est disposé intégré dans le doigt de commande (6).
